# FASCICULE DE BREVET EUROPEEN

(11) **EP 3 957 779 B1**
(45) Date de publication et mention de la délivrance du brevet: **04.09.2024**
(21) Numéro de dépôt: 21190672.2
(22) Date de dépôt: 10.08.2021
(51) Int. Cl.: D01B 1/36, F16G 3/10, F16G 5/10, F16G 7/00

(54) **COURROIE DE TEILLEUSE A ARMATURE POUR L'ENTRAINEMENT DE TIGES VÉGÉTALES**
RIEMEN EINER BRECH- UND SCHWINGMASCHINE MIT ARMATUR FÜR DEN VORSCHUB VON PFLANZENSTÄNGELN
BELT FOR TILLER WITH FRAME FOR CARRYING PLANT STALKS

(30) Priorité: 21.08.2020 FR 2008608
(43) Date de publication de la demande: 23.02.2022
(73) Titulaire: N.V. Depoortere, 8791 Beveren-Leie (BE)
(72) Inventeur: CLAERBOUT, Valentin, 8500 KORTRIJK (BE); DEPOORTERE, Rik, 8780 OOSTROZEBEKE (BE)
(74) Mandataire: Cabinet Beau de Loménie

(56) Documents cités:
- FR-A1- 2 671 841
- FR-A5- 2 172 748
- JP-U- S61 106 648
- US-A- 1 589 732

## Description

### Domaine technique

L'invention concerne le domaine du teillage de tiges végétales, telles le lin ou le chanvre. Le teillage consiste essentiellement à broyer les tiges puis à les battre afin de séparer les fibres du bois. A l'issue du processus de teillage, on obtient une nappe de filasse. Pour réaliser l'opération de teillage, on utilise communément une machine dénommée teilleuse.

### Technique antérieure

Une teilleuse comprend généralement un dispositif d'entraînement pour transporter les tiges végétales selon la direction longitudinale de la teilleuse au travers des différents modules de la machine de teillage, notamment le module de broyage puis les modules de battage qui sont munis de turbines destinées à battre les tiges afin de retirer les anas.

Le dispositif d'entraînement comporte traditionnellement une chaîne de maillons métalliques qui présentent la forme d'un « U ». Ces maillons sont fixés à une sangle plate refermée sur elle-même et qui est montée sur des rouleaux d'entraînement. Les maillons sont fixés sur la face extérieure de la sangle, c'est-à-dire la face qui ne vient pas au contact des rouleaux d'entraînement. Le dispositif d'entraînement comporte en outre une courroie d'entraînement qui est agencée pour venir se loger entre les ailes des maillons. Généralement, cette courroie, lorsqu'elle n'est pas montée, a une forme ovale et une direction longitudinale ; elle présente une épaisseur définie entre une face intérieure et une face extérieure de la courroie, la courroie ayant un corps en caoutchouc s'étendant selon la direction longitudinale. Sa section transversale présente généralement une forme sensiblement rectangulaire ou trapézoïdale.

La courroie présente aussi une largeur définie entre des premier et second flancs de la courroie. Les faces extérieure et intérieure sont définies en référence à l'ovale formé par la courroie. La courroie est agencée pour venir s'engager, de façon amovible, dans les maillons de sorte que les premier et second flancs de la courroie viennent en appui contre les ailes des maillons. Lorsque la courroie est engagée avec la chaine, de façon serrée, on comprend que le déplacement de la chaîne a pour effet de déplacer la courroie.

La courroie présente traditionnellement un brin dont la longueur est supérieure au brin de la sangle, de sorte que la courroie n'est engagée dans des maillons du dispositif d'entraînement et pince les tiges végétales que sur une partie de la longueur du brin de la courroie. La chaîne et la courroie forment chacune un ovale avec un brin retour vers le haut pour la chaîne et vers le bas pour la courroie.

Les tiges végétales sont amenées sous forme de nappe en amont du dispositif d'entraînement, c'est-à-dire juste avant l'engagement de la courroie dans les maillons. Les tiges végétales, orientées perpendiculairement au sens de déplacement de la courroie, sont alors saisies entre la courroie et les maillons du dispositif d'entraînement, puis déplacées selon la direction longitudinale de la courroie - grâce à l'engagement de la courroie dans la chaîne - afin d'être transportées dans les différents modules de la teilleuse.

On comprend que la nappe végétale se sépare du dispositif d'entraînement, en aval, au moment où la courroie se désengage des maillons.

L'engagement et le désengagement successifs de la courroie dans les maillons a pour effet d'user les pièces constitutives du dispositif d'entraînement, et en particulier la courroie d'entraînement des tiges végétales.

Il arrive parfois que la courroie casse en raison des efforts mécaniques qu'elle subit, ce qui nécessite d'arrêter la teilleuse afin de réparer la courroie cassée. Généralement, la réparation consiste à tailler en biseau les deux extrémités de la courroie avant de les coller l'une à l'autre. On comprend qu'une courroie réparée est moins robuste qu'une courroie neuve. Lorsque la courroie n'est pas réparable, elle doit être changée.

Dans tous les cas, on comprend que l'arrêt de la machine diminue la productivité des opérations de teillage.
une teilleuse est par exemple connue du document US 1589 732 A, qui montre le préambule de la revendication 1.

### Exposé de l'invention

Un but de la présente invention est de proposer une courroie plus robuste que les courroies traditionnelles, notamment à l'endroit de la jonction entre les deux extrémités de la courroie.

L'invention atteint son but par le fait que le corps comporte des première et seconde portions d'extrémité fixées l'une à l'autre de sorte que le corps forme une première boucle; l'armature comporte des première et seconde parties d'extrémité fixées l'une à l'autre de sorte que l'armature forme une seconde boucle incluse dans la première boucle; la courroie comporte en outre au moins une première cavité longitudinale, parallèle à l'armature et disposée entre l'armature et le premier flanc de la courroie, la première cavité longitudinale s'étendant selon la direction longitudinale du corps de la courroie et formant une alvéole qui s'étend selon la direction longitudinale du corps, en sorte d'augmenter la déformabilité élastique de la courroie selon sa largeur; l'armature comporte en outre un dispositif de maintien pour empêcher le glissement de l'armature par rapport au corps en caoutchouc selon la direction longitudinale.

De préférence, mais non exclusivement, l'armature est métallique. Elle pourrait également être réalisée dans un autre matériau présentant une forte résistance à la traction, par exemple dans un matériau composite ou en carbone, ou bien dans tout autre matériau résistant à la traction.

L'armature a pour but de conférer à la courroie une résistance à la traction sensiblement supérieure à celle du corps en caoutchouc. On augmente ainsi la robustesse de la courroie.

Avantageusement, l'armature est constituée d'une bande plate ayant une première face et une seconde face parallèle à la première face, la première face étant parallèle à la face extérieure de la courroie. La bande plate est de préférence métallique. L'armature présente donc la forme d'un ruban.

Grâce à la forme en ruban de l'armature, la courroie conserve une souplesse en flexion assurant la déformation lors du passage des rouleaux d'entraînement.

De préférence, les première et seconde parties d'extrémité de l'armature se chevauchent selon une zone de fixation.

Les première et seconde parties d'extrémité peuvent aussi être fixées l'une à l'autre à l'aide d'une pièce de liaison rapportée et reliant les première et seconde parties d'extrémité. Alternativement, les première et seconde parties d'extrémité de l'armature sont fixées bout à bout par coopération de forme.

Encore de préférence, les première et seconde parties d'extrémité de l'armature sont fixées l'une à l'autre par sertissage, soudure, rivetage ou agrafage.

Avantageusement, le dispositif de maintien comporte des ailettes qui s'étendent transversalement à la direction longitudinale, les ailettes étant noyées dans le corps en caoutchouc.

On comprend donc que les ailettes s'étendent transversalement à une partie centrale de l'armature.

Les ailettes permettent d'augmenter la surface d'accroche entre l'armature et le corps en caoutchouc, ce qui a pour effet d'éviter un glissement de l'armature par rapport au corps.

De préférence, deux ailettes adjacentes sont distantes l'une de l'autre selon la direction longitudinale.

Les ailettes sont préférentiellement disposées selon le long de l'armature, et font de préférence saillie de part et d'autre de la partie centrale de l'armature.

Selon une variante, éventuellement en combinaison avec les ailettes, le dispositif de maintien comporte un revêtement, par exemple un film, disposé au moins en partie autour de l'armature afin d'augmenter le coefficient de frottement entre l'armature et le corps en caoutchouc.

Selon un mode de réalisation avantageux, la première partie d'extrémité de l'armature est positionnée entre la seconde partie d'extrémité de l'armature et la seconde portion d'extrémité du corps.

De préférence, la seconde partie d'extrémité de l'armature est positionnée entre la première partie d'extrémité de l'armature et la première portion d'extrémité du corps.

Ce montage, de type sandwich, permet d'assurer une fixation robuste entre les portions d'extrémité du corps et les parties d'extrémité de l'armature, tout en assurant la continuité en forme de boucle du corps et de l'armature.

De préférence, les première et seconde portions d'extrémité du corps sont disposées de part et d'autre de l'armature.

Selon mode de réalisation avantageux, les première et seconde portions d'extrémité du corps sont fixées l'une à l'autre par collage ou vulcanisation.

La première cavité longitudinale présente de préférence une section transversale de forme oblongue s'étendant entre la face intérieure et la face extérieure de la courroie.

La première cavité longitudinale permet d'augmenter la déformabilité élastique de la courroie selon sa largeur et, par voie de conséquence, permet de faciliter l'engagement et désengagement de la courroie dans des maillons de la chaîne de la teilleuse.

La première cavité est entièrement logée dans le corps.

De préférence, la première cavité est vide ; elle pourrait toutefois être remplie d'une matière déformable de type mousse sans sortir du cadre de la présente invention.

De préférence, le corps comporte en outre une seconde cavité longitudinale, parallèle à la première cavité longitudinale et disposée entre l'armature et un second flanc de la courroie, l'armature étant disposée entre les première et seconde cavités longitudinales.

Cette seconde cavité longitudinale s'étend selon la direction longitudinale du corps de la courroie. Elle forme une seconde alvéole qui s'étend selon la direction longitudinale du corps.

La seconde cavité longitudinale permet d'augmenter encore la déformabilité élastique de la courroie selon sa largeur et, par voie de conséquence, permet de faciliter l'engagement et désengagement de la courroie dans des maillons de la chaîne de la teilleuse.

L'invention porte également sur une teilleuse comportant un dispositif d'entrainement de tiges végétales comprenant :
au moins une courroie selon l'invention, et
au moins une chaîne à maillons coopérant avec ladite courroie.

La chaîne à maillons comporte maillons qui comprennent des ailes entre lesquelles sont engagés les premier et second flancs de la courroie.

### Description des dessins

L'invention sera mieux comprise à la lecture de la description qui suit de modes de réalisation donné à titre d'exemples non limitatifs, en référence aux dessins annexés, sur lesquels :
[Fig. **1****]** La figure **1** est une vue schématique en vue de côté, d'une partie d'une teilleuse selon l'invention ;

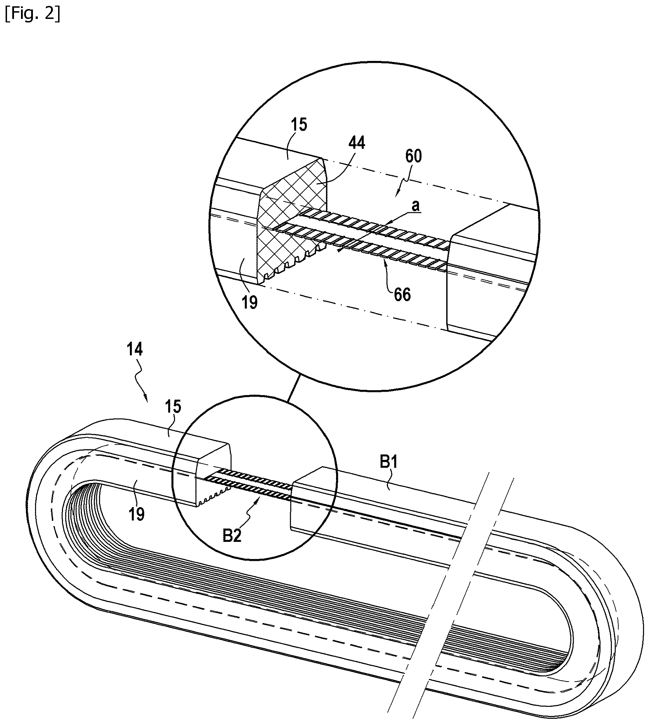

[Fig. **2****]** La figure **2** est une vue en perspective d'un mode de réalisation de la courroie selon l'invention, illustrant en transparence une portion du corps, montrant l'armature ;
[Fig. **3****]** La figure **3** illustre la section transversale de la courroie de la figure **2** ;
[Fig. **4****]** La figure **4** est une vue de dessus d'une partie de l'armature ;
[Fig. **5****]** La figure **5** illustre la courroie d'entrainement de la figure **2** engagée dans les maillons d'une chaîne d'entrainement de teilleuse ;
[Fig. **6****]** La figure **6** illustre la section transversale de la courroie selon l'invention ;
[Fig. **7****]** La figure **7** illustre l'assemblage des première et deuxième parties d'extrémité de l'armature de la courroie de la figure **1** ; et
[Fig. **8****]** La figure **8** illustre l'assemblage des première et deuxième portions d'extrémité du corps de la courroie de la figure **1****.**

### Description détaillée

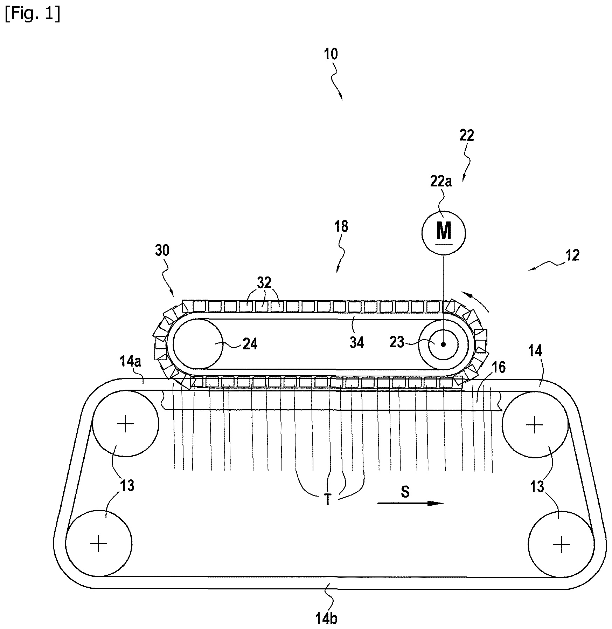

Sur la figure **1****,** on a illustré de façon très schématique une teilleuse **10** conforme à la présente invention, et plus particulièrement un système d'entraînement **12** pour déplacer des tiges végétales **T,** par exemple des tiges de lin, selon un sens d'avancée **S** qui est parallèle à la direction longitudinale de la teilleuse **10.**

Considéré selon le sens d'avancée des tiges végétales dans la teilleuse, le système d'entraînement **12** de tiges végétales comporte, dans cet exemple schématique, un dispositif d'entraînement **18** de tiges végétales **T.**

La teilleuse **10** comporte par ailleurs un système de déplacement **22** pour mettre en mouvement le dispositif d'entraînement **18.**

Le système de déplacement **22** comporte un organe moteur **22a** pour entraîner en rotation une poulie d'entraînement **23** coopérant respectivement avec le dispositif d'entraînement **18.** Il est également prévu une poulie menée **24** qui coopère avec la chaîne.

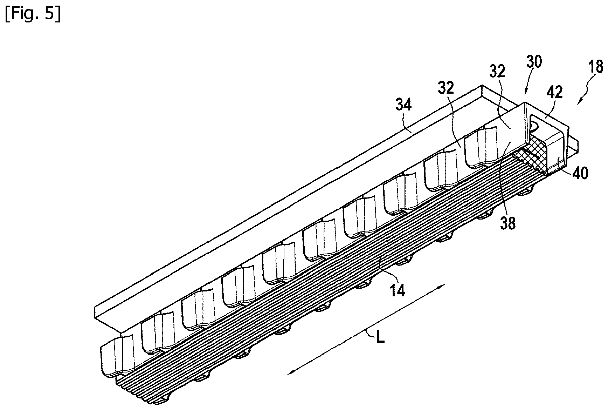

Le dispositif d'entraînement **18** de tiges végétales pour la teilleuse **10** comporte une chaîne **30,** illustrée en figure **5****,** qui est constituée d'une succession de maillons **32,** la chaîne **30** est fixée à une sangle d'entraînement **34,** par exemple à l'aide de rivets. Les maillons sont préférentiellement réalisés dans un matériau rigide, par exemple en métal.

Chaque maillon **32** présente la forme d'un « U » qui comporte deux ailes **38,40** parallèles l'une à l'autre, chacune des ailes s'étendant perpendiculairement depuis une base **42** du maillon. Les bases des maillons sont fixées à la sangle d'entraînement **34.**

Le dispositif d'entrainement **18** comporte en outre une courroie **14,** qui est conformée pour coopérer avec les maillons **32** de la chaîne du dispositif d'entrainement **18.** Cette courroie forme une boucle. La courroie **14** coopère avec des rouleaux **13.** Le brin actif **14**a de la courroie **14** s'engage avec la chaîne **30,** tandis que le brin retour **14**b passe, de façon connue, en dessous du rail **16.**

La courroie **14** peut être engagée ou désengagée dans les maillons. Lorsque la courroie **14** est en prise avec les maillons, ces derniers enserrent la courroie et la maintiennent de façon à la déplacer selon le sens de déplacement **S.** Pour ce faire, chacun des maillons **32** comporte un logement, qui est défini entre la base et les deux ailes parallèles. Ce logement est destiné à recevoir la courroie **14.** Autrement dit, la courroie **14** est logée de façon amovible dans les logements des maillons **32.** En amont du dispositif d'entrainement, les tiges végétales viennent s'engager entre les maillons et la courroie **14.** Les tiges végétales **T** étant alors pincées entre la courroie **14** et les maillons, on comprend que la mise en mouvement du dispositif d'entrainement a pour effet de déplacer la courroie ensemble avec les tiges végétales **T** selon le sens de déplacement **S.**

Comme expliqué ci-dessus, la courroie **14** est agencée pour venir s'insérer dans les logements, c'est-à-dire entre les ailes **38, 40** des maillons **32** de la chaîne **30.** La courroie présente en outre une largeur ℓ qui est définie entre des premier et second flancs **19, 21** de la courroie **14.**

Par ailleurs, la courroie **14** présente une direction longitudinale **L,** une épaisseur **E** définie entre une face extérieure **15** et une face intérieure **17** de ladite courroie. Comme on le comprend à l'aide de la figure **5****,** les premier et deuxième flancs **19, 21** de la courroie **14** sont destinés à venir en appui contre les ailes **38, 40** des maillons **32** lorsque la courroie **14** est engagée dans la chaîne **30.**

La courroie **14** comporte un corps **44** en caoutchouc.

Considérée en coupe transversale, le corps **44** de la courroie **14** comprend une portion centrale **50,** ainsi qu'une première portion latérale **52** et une deuxième portion latérale **54** opposée à la première portion latérale **52.** Les première et deuxième portions latérales sont disposées respectivement entre la portion centrale et les premiers et des premier et second flancs.

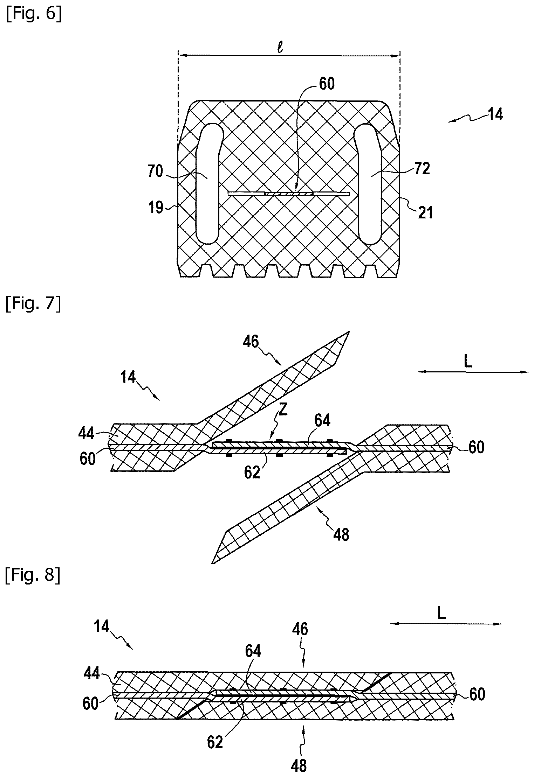

Comme illustré en figures **7** et **8****,** le corps **44** comporte des première et seconde portions d'extrémité **46, 48,** qui sont fixées l'une à l'autre de sorte que le corps **44** forme une première boucle **B1.** Dans cet exemple non limitatif, les première et seconde portions d'extrémité **46, 48** du corps **44** sont fixées l'une à l'autre par collage ou vulcanisation.

Conformément à l'invention, la courroie **14** comporte en outre une armature **60,** de préférence métallique, qui est disposée à l'intérieur du corps **44.** Comme illustré en figures, le corps s'étend selon la direction longitudinale. Par ailleurs, l'armature **60** comporte des première et seconde parties d'extrémité **62, 64** qui sont fixées l'une à l'autre de sorte que l'armature forme une seconde boucle **B2** incluse dans la première boucle **B1.**

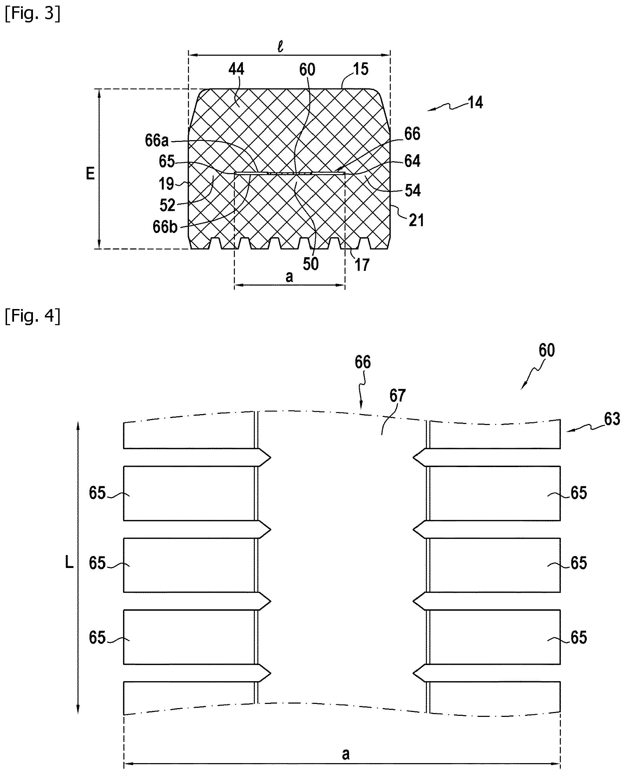

Dans cet exemple, l'armature **60** est constituée d'une bande plate **66** ayant une première face **66A** et une seconde face **66**b opposée à la première face **66**a**,** la première face **66**a étant parallèle à la face extérieure **15** de la courroie **14.** Dans l'exemple de la figure **3****,** l'armature **60** est disposée dans la portion **50** du corps **44.**

La largeur **a** de l'armature **60** est, dans cet exemple, environ égale à la moitié de la largeur ℓ de la courroie **14.**

Dans cet exemple, les première et seconde parties d'extrémité **62, 64** de l'armature se chevauchent selon une zone de fixation **Z.** Plus précisément, dans cet exemple non limitatif, les premières secondes parties d'extrémité **62, 64** sont fixées l'une à l'autre par rivetage. Elles pourraient également être fixées l'une à l'autre par sertissage, soudure, ou agrafage, ou par tout autre moyen de fixation.

A l'aide de la figure **7****,** on note par ailleurs que la zone de fixation **Z** s'étend sur une fraction de la longueur de l'armature **60,** qui est de l'ordre de quelques centimètres dans cet exemple.

Tel qu'illustré en figures **7** et **8****,** la première partie d'extrémité **62** de l'armature **60** est positionnée entre la seconde partie d'extrémité **64** de l'armature **60** et la seconde portion d'extrémité **48** du corps **44.**

Par ailleurs, la seconde partie d'extrémité **64** de l'armature **60** est positionnée entre la première partie d'extrémité **62** de l'armature **60** et la première portion d'extrémité **46** du corps.

Ainsi, les première et seconde portions d'extrémité **46, 48** du corps **44** sont disposées de part et d'autre de l'armature, et plus précisément de part et d'autre de la zone de fixation **Z.**

Comme exposé ci-dessus, les première et seconde portions d'extrémité **46, 48** du corps **44** sont solidarisées l'une à l'autre, par exemple par collage ou vulcanisation, tout en enserrant l'armature dans sa zone de fixation **Z.**

Il est également visible que les première et seconde portions d'extrémité **46, 48** du corps présentent une longueur, considéré selon la direction longitudinale **L,** qui est sensiblement égale à la longueur de la zone de fixation **Z.**

Un tel montage permet d'assurer à la fois la continuité de l'armature, mais aussi du corps en caoutchouc de la courroie.

Selon un autre aspect avantageux de l'invention, l'armature **60** comporte en outre un dispositif de maintien **63** pour empêcher le glissement de l'armature par rapport au corps en caoutchouc selon la direction longitudinale **L.**

Dans l'exemple illustré, le dispositif de maintien **63** comporte des ailettes **65** qui s'étendent transversalement à la direction longitudinale **L.** Comme illustré en figure **3****,** ces ailettes **65** sont noyées dans le corps en caoutchouc.

Comme visible en figure **4****,** deux ailettes adjacentes sont distantes l'une de l'autre selon la direction longitudinale. Cette conformation a pour effet d'améliorer la solidarisation de l'armature avec le corps en caoutchouc.

Ces ailettes **65** sont disposées le long de l'armature, et font saillies de part et d'autre d'une partie centrale **67** de l'armature.

Avantageusement, le corps comporte en outre au moins un orifice longitudinal **70,72,** constituant une cavité longitudinale, parallèle à l'armature et disposée entre l'armature et un premier flanc **19** de la courroie **14.**

Sur la figure **6****,** on a illustré une variante de réalisation de la courroie **14** selon l'invention. Cette variante diffère du mode de réalisation décrit en figure **3****,** par le fait qu'elle comporte des première et seconde cavités longitudinales **70, 72** qui s'étendent selon la direction longitudinale **L,** de façon parallèle à l'armature **60,** chacune des cavités **70, 72** étant disposée entre l'armature **60** et l'un des premier et second flancs **19, 21** de la courroie. Les première et seconde cavités longitudinales sont entièrement situées dans le corps de la courroie. Elles présentent la forme d'alvéole ménagées dans le corps.

La présence de ces cavités **70, 72** permet d'augmenter la déformabilité élastique de la courroie selon sa largeur et, par voie de conséquence, permet de faciliter l'engagement et désengagement de la courroie dans des maillons de la chaîne **30.**

## Revendications

1. Courroie (14) d'entrainement de tiges végétales (T) de teilleuse (10), la courroie formant une boucle et ayant une direction longitudinale (L), une épaisseur (E) définie entre une face intérieure (17) et une face extérieure (15) de la courroie, et une largeur (l) définie entre des premier et second flancs (19,21) de la courroie, la courroie ayant un corps (44) en caoutchouc s'étendant selon la direction longitudinale (L), la courroie (14) comporte en outre une armature (60), de préférence métallique, disposée à l'intérieur du corps (44) et s'étendant selon la direction longitudinale (L),
**caractérisée en ce que** le corps (44) comporte des première et seconde portions d'extrémité fixées l'une à l'autre de sorte que le corps forme une première boucle (B1), **en ce que** l'armature (60) comporte des première et seconde parties d'extrémité (62,64) fixées l'une à l'autre de sorte que l'armature forme une seconde boucle (B2) incluse dans la première boucle (B1), **en ce que** la courroie comporte en outre au moins une première cavité longitudinale (70), parallèle à l'armature et disposée entre l'armature et le premier flanc (19) de la courroie, la première cavité longitudinale (70) s'étendant selon la direction longitudinale du corps de la courroie et formant une alvéole qui s'étend selon la direction longitudinale du corps, en sorte d'augmenter la déformabilité élastique de la courroie selon sa largeur, et **en ce que** l'armature (60) comporte en outre un dispositif de maintien (63) pour empêcher le glissement de l'armature par rapport au corps en caoutchouc selon la direction longitudinale (L).

2. Courroie selon la revendication 1, dans laquelle l'armature (60) est constituée d'une bande plate (66) ayant une première face (66a) et une seconde face (66b) parallèle à la première face (66a), la première face (66a) étant parallèle à la face extérieure (15) de la courroie (14).

3. Courroie selon la revendication **2,** dans laquelle les première et seconde parties d'extrémité (62,64) se chevauchent selon une zone de fixation (Z).

4. Courroie selon l'une quelconque des revendications **1** à **3, caractérisée en ce que** le dispositif de maintien (63) comporte des ailettes (65) qui s'étendent transversalement à la direction longitudinale (L), les ailettes étant noyées dans le corps en caoutchouc.

5. Courroie selon la revendication **4,** dans laquelle deux ailettes (65) adjacentes sont distantes l'une de l'autre selon la direction longitudinale.

6. Courroie selon la revendication **4** ou **5,** dans laquelle les ailettes (65) sont disposées selon le long de l'armature.

7. Courroie selon la revendication **6,** dans laquelle les ailettes font saillie de part et d'autre d'une partie centrale (67) de l'armature.

8. Courroie selon l'une quelconque des revendications précédentes, dans laquelle les première et seconde parties d'extrémité (62,64) de l'armature (60) sont fixées l'une à l'autre par sertissage, rivetage, soudure ou agrafage.

9. Courroie selon l'une quelconque des revendications précédentes, dans laquelle, considérée selon la section transversale de ladite courroie, la première partie d'extrémité (62) de l'armature (60) est positionnée entre la seconde partie d'extrémité (64) de l'armature et la seconde portion d'extrémité (48) du corps (44).

10. Courroie selon la revendication **9,** dans laquelle, considérée selon la section transversale de ladite courroie, la seconde partie d'extrémité (64) de l'armature (60) est positionnée entre la première partie d'extrémité (62) de l'armature (60) et la première portion d'extrémité (46) du corps.

11. Courroie selon la revendication **9** ou **10,** dans laquelle les première et seconde portions d'extrémité (46,48) du corps (44) sont disposées de part et d'autre de l'armature.

12. Courroie selon l'une quelconque des revendications précédentes, dans laquelle les première et seconde portions d'extrémité (46,48) du corps (44) sont fixées l'une à l'autre par collage ou vulcanisation.

13. Courroie selon l'une quelconque des revendications précédentes, dans laquelle le corps comporte en outre une seconde cavité longitudinale (72), parallèle à la première cavité longitudinale et disposée entre l'armature et le second flanc (21) de la courroie, l'armature étant disposée entre les première et seconde cavités longitudinales (70,72).

14. Teilleuse (10) comportant un dispositif d'entrainement (18) de tiges végétales (T) comprenant :
au moins une courroie (14) selon l'une quelconque des revendications précédentes, et
au moins une chaîne (30) à maillons coopérant avec ladite courroie.

## Patentansprüche

1. Riemen (14) zum Antreiben von Pflanzenstängeln (T) einer Brech- und Schwingmaschine (10), wobei der Riemen eine Schleife bildet und eine Längsrichtung (L), eine Stärke (E), die zwischen einer Innenseite (17) und einer Außenseite (15) des Riemens definiert ist, und eine Breite (I), die zwischen einer ersten und einer zweiten Flanke (19,21) des Riemens definiert ist, aufweist, wobei der Riemen einen Körper (44) aus Gummi aufweist, der sich in der Längsrichtung (L) erstreckt, wobei der Riemen (14) ferner eine vorzugsweise metallische Armierung (60) umfasst, die im Innern des Körpers (44) angeordnet ist und sich in der Längsrichtung (L) erstreckt, **dadurch gekennzeichnet, dass** der Körper (44) einen ersten und einen zweiten Endabschnitt umfasst, die aneinander befestigt sind, sodass der Körper eine erste Schleife (B1) bildet, dass die Armierung (60) einen ersten und einen zweiten Endabschnitt (62, 64) umfasst, die aneinander befestigt sind, sodass die Armierung eine zweite Schleife (B2) bildet, die in der ersten Schleife (B1) beinhaltet ist, dass der Riemen ferner mindestens einen ersten Längshohlraum (70) parallel zu der Armierung und der zwischen der Armierung und der ersten Flanke (19) des Riemens angeordnet ist, umfasst, wobei sich der erste Längshohlraum (70) in Längsrichtung des Körpers des Riemens erstreckt und eine Zelle bildet, die sich in Längsrichtung des Körpers erstreckt, um die elastische Verformbarkeit des Riemens entlang seiner Breite zu erhöhen, und dass die Armierung (60) ferner eine Haltevorrichtung (63) umfasst, um das Verrutschen der Armierung in Bezug auf den Körper aus Gummi in Längsrichtung (L) zu verhindern.

2. Riemen nach Anspruch 1, wobei die Armierung (60) aus einem flachen Streifen (66) besteht, der eine erste Seite (66a) und eine zweite Seite (66b) parallel zu der ersten Seite (66a) aufweist, wobei die erste Seite (66a) parallel zu der Außenseite (15) des Riemens (14) ist.

3. Riemen nach Anspruch 2, wobei der erste und der zweite Endbereich (62, 64) sich entlang einer Befestigungszone (Z) überlappen.

4. Riemen nach einem der Ansprüche 1 bis 3, **dadurch gekennzeichnet, dass** die Haltevorrichtung (63) Rippen (65) umfasst, die sich quer zu der Längsrichtung (L) erstrecken, wobei die Rippen in den Körper aus Gummi eingebettet sind.

5. Riemen nach Anspruch 4, wobei zwei benachbarte Rippen (65) in Längsrichtung voneinander beabstandet sind.

6. Riemen nach Anspruch 4 oder 5, wobei die Rippen (65) entlang der Armierung angeordnet sind.

7. Riemen nach Anspruch 6, wobei die Rippen auf beiden Seiten eines Mittelteils (67) der Armierung hervorstehen.

8. Riemen nach einem der vorherigen Ansprüche, wobei der erste und der zweite Endabschnitt (62, 64) der Armierung (60) durch Crimpen, Nieten, Schweißen oder Heften aneinander befestigt sind.

9. Riemen nach einem der vorherigen Ansprüche, wobei der erste Endbereich (62) der Armierung (60), betrachtet im Querschnitt des Riemens, zwischen dem zweiten Endbereich (64) der Armierung und dem zweiten Endabschnitt (48) des Körpers (44) positioniert ist.

10. Riemen nach Anspruch 9, wobei der zweite Endbereich (64) der Armierung (60), betrachtet im Querschnitt des Riemens, zwischen dem ersten Endbereich (62) der Armierung (60) und dem ersten Endabschnitt (46) des Körpers positioniert ist.

11. Riemen nach Anspruch 9 oder 10, wobei der erste und der zweite Endabschnitt (46, 48) des Körpers (44) auf beiden Seiten der Armierung angeordnet sind.

12. Riemen nach einem der vorherigen Ansprüche, wobei der erste und der zweite Endabschnitt (46, 48) des Körpers (44) durch Kleben oder Vulkanisieren aneinander befestigt sind.

13. Riemen nach einem der vorherigen Ansprüche, wobei der Körper ferner einen zweiten Längshohlraum (72) parallel zu dem ersten Längshohlraum und der zwischen der Armierung und der zweiten Flanke (21) des Riemens angeordnet ist, umfasst, wobei die Armierung zwischen dem ersten und dem zweiten Längshohlraum (70, 72) angeordnet ist.

14. Brech- und Schwingmaschine (10), umfassend eine Antriebsvorrichtung (18) für Pflanzenstängel (T), umfassend:
mindestens einen Riemen (14) nach einem der vorherigen Ansprüche, und
mindestens eine Gliederkette (30), die mit dem Riemen zusammenwirkt.

## Claims

1. A belt (14) for driving plant stems (T) of a scutcher (10), the belt forming a loop and having a longitudinal direction (L), a thickness (E) defined between an inner face (17) and an outer face (15) of the belt, and a width (I) defined between first and second flanks (19, 21) of the belt, the belt having a rubber body (44) extending in the longitudinal direction (L), the belt (14) further comprises a reinforcement (60), preferably metallic, arranged inside the body (44) and extending in the longitudinal direction (L),
**characterized in that** the body (44) comprises first and second end portions attached to one another so that the body forms a first loop (B1), **in that** the reinforcement (60) comprises first and second end parts (62, 64) attached to one another so that the reinforcement forms a second loop (B2) included in the first loop (B1), and **in that** the belt further comprises at least a first longitudinal cavity (70), parallel to the reinforcement and arranged between the reinforcement and the first flank (19) of the belt, the first longitudinal cavity (70) extending in the longitudinal direction of the body of the belt and forming a cell that extends in the longitudinal direction of the body, so as to increase the elastic deformability of the belt along its length, and **in that** the reinforcement (60) further comprises a holding device (63) to prevent the reinforcement from slipping relative to the rubber body in the longitudinal direction (L).

2. The belt according to claim **1,** wherein the reinforcement (60) is made of a flat strip (66) having a first face (66a) and a second face (66b) parallel to the first face (66a), the first face (66a) being parallel to the outer face (15) of the belt (14).

3. The belt according to claim **2,** wherein the first and second end portions (62, 64) overlap along an attachment zone (Z).

4. The belt according to any one of claims **1** to **3, characterized in that** the holding device (63) comprises fins (65) which extend transversely to the longitudinal direction (L), the fins being embedded in the rubber body.

5. The belt according to claim **4,** wherein two adjacent fins (65) are spaced from one another in the longitudinal direction.

6. The belt according to claim **4** or **5,** wherein the fins (65) are arranged along the length of the reinforcement.

7. The belt according to claim **6,** wherein the fins protrude on both sides of a central part (67) of the reinforcement.

8. The belt according to any one of the preceding claims, wherein the first and second end portions (62, 64) of the reinforcement (60) are secured together by crimping, riveting, welding or stapling.

9. The belt according to any one of the preceding claims, wherein, viewed along the cross-section of said belt, the first end portion (62) of the reinforcement (60) is positioned between the second end portion (64) of the reinforcement and the second end portion (48) of the body (44).

10. The belt according to claim **9,** wherein, viewed along the cross-section of said belt, the second end portion (64) of the reinforcement (60) is positioned between the first end portion (62) of the reinforcement (60) and the first end portion (46) of the body.

11. The belt according to claim **9** or **10,** wherein the first and second end portions (46, 48) of the body (44) are arranged on both sides of the reinforcement.

12. The belt according to any one of the preceding claims, wherein the first and second end portions (46, 48) of the body (44) are attached to one another by gluing or vulcanization.

13. The belt according to any one of the preceding claims, wherein the body further comprises a second longitudinal cavity (72), parallel to the first longitudinal cavity and arranged between the reinforcement and the second flank (21) of the belt, the reinforcement being arranged between the first and second longitudinal cavities (70, 72).

14. A scutcher (10) comprising a device (18) for driving plant stems (T), comprising:
at least one belt (14) according to any one of the preceding claims, and
at least one chain (30) with links engaging with said belt.
